# EUROPÄISCHE PATENTSCHRIFT

(11) **EP 3 183 551 B1**
(45) Veröffentlichungstag und Bekanntmachung des Hinweises auf die Patenterteilung: **10.10.2018**
(21) Anmeldenummer: 15770789.4
(22) Anmeldetag: 19.08.2015
(51) Int. Cl.: G01M 17/007

(54) **VERFAHREN ZUR ABDECKUNG DES VERSCHIEBEBEREICHS IN FAHRZEUGLÄNGSRICHTUNG VON WENIGSTENS EINER VERSCHIEBBAREN RADAUFNAHME IN EINEM FAHRZEUGPRÜFSTAND SOWIE FAHRZEUGPRÜFSTAND**
METHOD FOR COVERING THE MOVEMENT REGION IN THE LONGITUDINAL DIRECTION OF THE VEHICLE OF AT LEAST ONE MOVABLE WHEEL RECEPTACLE IN A VEHICLE TEST BENCH AND VEHICLE TEST BENCH
PROCÉDÉ POUR LE RECOUVREMENT DE LA ZONE DE DÉPLACEMENT, DANS LA DIRECTION LONGITUDINALE D'UN VÉHICULE, D'AU MOINS UN LOGEMENT DE ROUE MOBILE DANS UN BANC D'ESSAI DE VÉHICULE AINSI QUE BANC D'ESSAI DE VÉHICULE

(30) Priorität: 21.08.2014 DE 102014111998
(43) Veröffentlichungstag der Anmeldung: 28.06.2017
(73) Patentinhaber: Dürr Assembly Products GmbH, 66346 Püttlingen (DE)
(72) Erfinder: PASKER, Bernd, 66346 Püttlingen (DE); KURT, Ismail, 66333 Völklingen (DE); TENTRUP, Thomas, 66663 Merzig-Mechern (DE); LANG, Thomas, F-57520 Rouhling (FR); STEINER, Joffrey, F-57410 Siersthal (FR)
(74) Vertreter: Patentanwaltskanzlei Vièl & Wieske PartGmbB
(86) Internationale Anmeldenummer: PCT/DE2015/100345
(87) Internationale Veröffentlichungsnummer: WO 2016/026485

(56) Entgegenhaltungen:
- WO-A1-2007/141639
- WO-A1-2010/028361
- US-A- 3 651 690
- US-A- 3 914 990

## Beschreibung

Die vorliegende Erfindung betrifft ein Verfahren zur Bildung einer Fahrspur in Fahrzeuglängsrichtung in einem Fahrzeugprüfstand, wobei die Fahrspur wenigstens eine verschiebbare Radaufnahme umfasst, nach dem Oberbegriff des Anspruchs 1 sowie einen Fahrzeugprüfstand nach dem Oberbegriff des Anspruchs 6.

Es sind bereits derartige Fahrzeugprüfstände bekannt, die Radaufnahmen aufweisen, die jeweils Fahrzeugrädern eines Fahrzeugs zugeordnet sind, das sich zur Durchführung von Prüfarbeiten, Einstellarbeiten und/oder von Messarbeiten in dem Fahrzeugprüfstand befindet.

Derartige Radaufnahmen können beispielsweise aus Einzel- oder Doppelrollen oder aus Platten bestehen, die wiederum horizontal schwimmend gelagert sein können.

Bei Fahrwerkständen ist es bekannt, dass die Radaufnahmen aus horizontal schwimmend gelagerten Doppelrollen oder Schwimmplatten bestehen. Hierbei können Winkelencoder vorhanden sein zur Erfassung von Lenkeinschlägen.

Bei Roll-, Brems- und ABS-Prüfständen ist es beispielsweise bekannt, Doppelrollen vorzusehen zum Beschleunigen und Abbremsen des Rades mit einer Geschwindigkeitserfassung. Dabei wird das auf die Rollen wirkende Drehmoment gemessen.

Es sind Prüfstände bekannt, bei denen in einer Fahrspur mehrere Radaufnahmen vorhanden sind. Dies ist dann der Fall, wenn im Fahrzeugprüfstand bei einem Fahrzeug Räder mehrerer Achsen vermessen bzw. eingestellt werden sollen. Um in dem Prüfstand verschiedene Fahrzeuge messen bzw. einstellen zu können, ist es erforderlich, dass die Abstände dieser Radaufnahmen zueinander veränderbar sind abhängig von den Radständen der Räder des Fahrzeugs. Sofern Räder von Fahrzeugen mit mehr als zwei Achsen gemessen bzw. eingestellt werden sollen, sind dann auch mehr als zwei Radaufnahmen in jeder Fahrspur, die dann entsprechend hinsichtlich ihrer Abstände einstellbar sein müssen.

Um für das Ein- und Ausfahren des Fahrzeugs in den Prüfstand hinein bzw. aus dem Prüfstand heraus eine Fahrspur zu erhalten, ist es bekannt, Tragelemente vorzusehen, die sich in der Fahrspur vor sowie hinter den jeweiligen Radaufnahmen befinden.

Die Angabe der Längsrichtung der Fahrzeuge definiert im vorliegenden Zusammenhang lediglich die Bewegungsrichtung und bezieht sich dabei auf die Längsrichtung eines im Fahrzeugprüfstand befindlichen Fahrzeuges.

Die Flexibilität hinsichtlich der Positionierung der Radaufnahmen ist insbesondere bei der Produktion von Lastkraftwagen und Bussen vorteilhaft, weil es bei diesen Fahrzeugen üblich ist, einen Fahrzeugrahmen vorzusehen, an den - abhängig von der jeweiligen Spezifikation - in verschiedener Weise Achsen angebracht werden können. Dies betrifft sowohl die Anzahl der Achsen als auch deren Position in Längsrichtung entlang des Fahrzeugrahmens.

Zur Positionierung der Radaufnahmen ist es bekannt (DE 10 2007 003 086 A1), die Radaufnahmen und die Tragelemente in Form eines umlaufenden Bandes zu verbinden. Durch eine Drehung dieses Bandes wird die Radaufnahme positioniert. Mit einer solchen Ausgestaltung ist es nicht möglich, bei mehreren Radaufnahmen in einem Band den Abstand dieser Radaufnahmen zueinander anzupassen. Daher muss in diesem Konzept jeder Radaufnahme in der Fahrspur ein Band zugeordnet werden. Dadurch wird die Flexibilität bei mehr als zwei Radaufnahmen pro Fahrspur erheblich einschränkt.

Der Anmelderin sind weitere Lösungen bekannt. Zur Positionierung der Radaufnahmen ist der Anmelderin auch eine Lösung bekannt, bei der die Tragelemente starr mit den Radaufnahmen verbunden werden. Bei einer Längsbewegung der Radaufnahme schieben sich diese Tragelemente in bzw. über feststehende Tragelemente.

Eine weitere, der Anmelderin bekannte Lösung (Rollabdeckung) besteht darin, die Radaufnahmen und die Tragelemente zu verbinden. Die Tragelemente sind als einzelne Elemente ausgeführt, die quer zur Fahrtrichtung tragend gelagert sind. Diese Elemente sind elastisch miteinander verbunden, so dass sie an definierten Punkten nach unten aus dem Bereich der Abdeckung geführt werden können.
Aus der WO 2007141639 A1 ist es bekannt, eine Fahrspur in einem Fahrzeugprüfstand durch ein umlaufendes Band auszubilden, auf dem alle Räder einer Fahrzeugseite aufstehen. Mit einer Drehung dieses Bandes sollen Effekte des Untergrundes simuliert werden. Der Fahrzeugprüfstand wird bei diesem Dokument durch einen Windkanal gebildet. Insbesondere sind bei dieser Entgegenhaltung keine Radaufnahmen in dem Sinne vorgesehen, dass die Räder eines Fahrzeugs jeweils auf einer eigenen Radaufnahme aufstehen. Dies ist gerade bei der Durchführung von Mess- und Einstellarbeiten an Parametern der Fahrwerkgeometrie von Bedeutung sowie auch dann, wenn die einzelnen Räder mit unterschiedlichen Antriebs- bzw. Bremsmomenten beaufschlagt werden sollen.

Die WO 2010028361 A1 beschreibt einen Bremsprüfstand, bei dem in einer Fahrspur zwei Radaufnahmen vorgesehen sind. Diese Radaufnahmen sind in ihrem Abstand veränderbar positionierbar zur Einstellung des Bremsprüfstandes auf unterschiedliche Radstände von Fahrzeugen. Es ist beschrieben, dass die Radaufnahmen auf eine Position mit minimalem Abstand positioniert werden zum Einfahren des Fahrzeugs in den Prüfstand und zum Ausfahren des Fahrzeugs aus dem Prüfstand.
Aus der US-PS 3,651,690 ist es bekannt, einen Rollenprüfstand vorzusehen, der lediglich eine Radaufnahme in einer Fahrspur aufweist für ein angetriebenes Rad der jeweiligen Fahrzeugseite. Die Radaufnahme weist Messmittel auf zur Erfassung des Momentes, das von einem aufstehenden Fahrzeugrad übertragen wird. Eine Verstellbarkeit der Radaufnahme in Längsrichtung des Prüfstandes ist nicht vorgesehen und wird auch nicht benötigt, weil nur das jeweils angetriebene Rad einer Fahrzeugseite auf der Radaufnahme aufsteht.
Die US-PS 3,914,990 beschreibt einen Prüfstand, bei dem eine Fahrspur einer Fahrzeugseite simuliert wird durch ein umlaufendes Band, das über nebeneinander angeordnete einzelne Rollen abgestützt wird. Diese Rollen sind in vertikaler Richtung einzeln verstellbar. Dadurch können Fahrten im Gelände simuliert werden. Eine Verstellbarkeit einer Radaufnahme in Längsrichtung einer Fahrspur ist aus diesem Stand der Technik nicht bekannt.

Der vorliegenden Erfindung liegt die Aufgabe zu Grunde, die Positionierung der Radaufnahmen in einem Fahrzeugprüfstand flexibel durchführen zu können unter der Randbedingung, dass hieraus resultierende Lücken in der Fahrspur abgedeckt werden können und dennoch möglichst kurze Taktzeiten erreicht werden bei der Durchführung der Arbeiten an den Fahrzeugen.

Diese Aufgabe wird nach der vorliegenden Erfindung gelöst durch ein Verfahren nach Anspruch 1 zur Bildung einer Fahrspur in Fahrzeuglängsrichtung in einem Fahrzeugprüfstand, wobei die Fahrspur wenigstens eine verschiebbare Radaufnahme umfasst. Die Verschiebung der Radaufnahme erfolgt zur Anpassung der Position der wenigstens einen Radaufnahme in Fahrzeuglängsrichtung an die Position des zugeordneten Rades des zu prüfenden Fahrzeugs. Die Zuordnung des Rades zu der wenigstens einen Radaufnahme erfolgt derart, dass das jeweilige Fahrzeugrad während des Prüfvorgangs im Fahrzeugprüfstand auf der Radaufnahme aufsteht bzw. abrollt. Weiterhin weist der Fahrzeugprüfstand Tragelemente auf, die sich in der Fahrspur des Fahrzeugs befinden und die das Fahrzeug beim Überfahren bzw. beim Anhalten stützend tragen. Diese Tragelemente und die wenigstens eine Radaufnahme schließen derart aneinander an, dass diese eine Fahrspur bilden zum Einfahren und auch zum Ausfahren eines zu prüfenden Fahrzeugs in den Fahrzeugprüfstand hinein bzw. aus dem Fahrzeugprüfstand hinaus. Nach der vorliegenden Erfindung sind Tragelemente in Fahrzeuglängsrichtung derart segmentiert, dass diese Tragelemente jeweils separat bewegbar sind in einer Richtung quer zur Fahrzeuglängsrichtung. Für eine Änderung der Position der wenigstens einen Radaufnahme im Fahrzeugprüfstand in Fahrzeuglängsrichtung werden diejenigen Tragelemente aus der Fahrspur herausbewegt, die sich zwischen der aktuellen Istposition der Radaufnahme und der nächsten anzusteuernden Sollposition der Radaufnahme in der Fahrspur befinden.

Hierbei erweist es sich als vorteilhaft, dass die Radaufnahme in Längsrichtung des Fahrzeugprüfstandes verstellt werden kann abhängig von den Anforderungen, die durch das Fahrzeug gegeben sind (insbesondere hinsichtlich des Radstandes des Fahrzeugs).

Durch die Trageelemente und deren Handhabbarkeit wird dennoch erreicht, dass keine Lücken in der Fahrspur entstehen. Es lässt sich erreichen, dass sich in Fahrtrichtung vor und hinter der Radaufnahme jeweils Tragelemente anschließen, wenn die Radaufnahme die Sollposition erreicht hat. Der Abstand zwischen den Tragelementen sowie auch zwischen den Tragelementen und der Radaufnahme ist dabei so bemessen, dass das jeweilige Rad des Fahrzeuges nicht in eine Lücke hineinfallen kann, wenn das Fahrzeug beim Ein- und Ausfahren in den Fahrzeugprüfstand bzw. aus dem Fahrzeugprüfstand hinaus bewegt wird. Dies gilt ebenso, wenn das Fahrzeug bei einem Prüfvorgang derart bewegt wird, dass das jeweilige Fahrzeugrad die Radaufnahme verlässt.

Da die Tragelemente quer zur Fahrzeuglängsrichtung aus der Fahrspur hinausbewegt werden, wird es möglich, die Radaufnahme beliebig zu positionieren. Beim Stand der Technik ist die Bewegungsmöglichkeit der Radaufnahme eingeschränkt. Da bei einer der bekannten Lösungen nach dem Stand der Technik die Tragelemente in Längsrichtung der Fahrspur übereinander geschoben werden, ergibt sich hierbei - bei mehreren Radaufnahmen in einer Fahrspur - ein Mindestabstand zwischen den Radaufnahmen, der der Größe eines Tragelementes entspricht.

Durch die Bewegung der Tragelemente quer zur Längsrichtung der Fahrspur können diese Probleme vorteilhaft vermieden werden.

Bei der Ausgestaltung nach Anspruch 2 werden in einem ersten Schritt alle aus der Fahrspur herauszubewegenden Tragelemente bestimmt, die sich zwischen der aktuellen Istposition der Radaufnahme und der nächsten anzusteuernden Sollposition der Radaufnahme in der Fahrspur befinden, wobei in einem zweiten Schritt die im Schritt 1 bestimmten Tragelemente aus der Fahrspur entfernt werden, wobei in einem dritten Schritt die Radaufnahme auf die nächste anzusteuernde Sollposition bewegt wird.

Bei dieser Ausgestaltung des Verfahrens wird die Fahrspur zunächst insoweit von Tragelementen "freigeräumt" als diese Tragelemente der nachfolgenden Bewegung der Radaufnahme im Weg sind, wenn diese Radaufnahme in ihre anzusteuernde Sollposition bewegt wird. Hierbei darf sich das Fahrzeug nicht im Prüfstand befinden, d.h. die Positionierung der Radaufnahmen und die Abdeckung des Verschiebebereichs müssen vor der Einfahrt des Fahrzeugs in den Prüfstand erfolgen.

Bei dieser Ausgestaltung des Verfahrens ist es beispielsweise einfach möglich, sicherzustellen, dass die Radaufnahme nur dann bewegt wird, wenn die Fahrspur auf dem Weg zur anzusteuernden Sollposition tatsächlich frei ist.

Es kann dabei eine Ausgestaltung realisiert werden, bei der eine Bewegung der Radaufnahme erst dann erfolgen durch eine Freigabe der Steuermittel zur Bewegung der Radaufnahme, wenn eine Kennung vorliegt, die signalisiert, dass das Freiräumen des Weges abgeschlossen ist.

Bei der Ausgestaltung nach Anspruch 3 wird eine definierte Menge von Tragelementen aus der Fahrspur herausbewegt, die sich jeweils in Bewegungsrichtung vor der Radaufnahme befinden bei der Bewegung der Radaufnahme von der Istposition zur nächsten anzusteuernden Sollposition.

Bei dieser Ausgestaltung erweist es sich als vorteilhaft, dass weniger Tragelemente gleichzeitig bewegt werden müssen. Dadurch lassen sich die erforderlichen Stellkräfte reduzieren. Es werden bei dieser Ausgestaltung des Verfahrens gerade die Tragelemente bewegt, die sich in Bewegungsrichtung der Radaufnahme unmittelbar vor der Radaufnahme befinden. Die Tragelemente werden bei dieser Ausgestaltung im Unterschied zur Ausgestaltung nach Anspruch 2 nicht sämtlich vorab aus der Fahrspur entfernt sondern nach und nach synchronisiert zur Bewegung der Radaufnahme.

Dies bedeutet, dass sich das Fahrzeug sich bei der Positionierung der Radaufnahmen im Prüfstand befinden kann. Sofern dabei Tragelemente aus der Fahrspur entfernt werden müssen, auf denen ein Rad des Fahrzeugs aufsteht, kann dennoch verhindert werden, dass dieses Rad in eine Lücke nach unten "fällt", indem sich ein Teil der Radaufnahme (in Form einer Abdeckung) bereits unter das Rad schiebt, bevor das entsprechende Tragelement aus der Fahrspur herausbewegt wird.

Bei der Ausgestaltung des Verfahrens nach Anspruch 4 erfolgt die Rückförderung der Tragelemente in die Fahrspur des Fahrzeugs im Fahrzeugprüfstand derart, dass aus der Fahrspur herausbewegte Tragelemente zunächst in dieser Position verbleiben bis die Radaufnahme die anzusteuernde Sollposition erreicht hat. Nach dem Erreichen der anzusteuernden Sollposition durch die Radaufnahme werden die Tragelemente wieder in die Fahrspur des Fahrzeugs bewegt.

Diese Vorgehensweise entspricht - im umgekehrten Sinne - der Vorgehensweise nach Anspruch 2. Nach dem Erreichen der anzusteuernden Sollposition durch die Radaufnahme werden die Tragelemente wieder in die Fahrspur hineinbewegt. Dadurch wird vorteilhaft erreicht, dass die Rückbewegung der Tragelemente erst erfolgt, wenn eine Bestätigung vorliegt, dass die Radaufnahme die anzusteuernde Sollposition erreicht hat.

Bei der Ausgestaltung des Verfahrens nach Anspruch 5 werden aus der Fahrspur herausbewegte Tragelemente unmittelbar dann wieder in eine Position in Bewegungsrichtung der Radaufnahme hinter der Radaufnahme in die Fahrspur hineinbewegt, wenn die Radaufnahme bei der Bewegung von deren Istposition zur anzusteuernden Sollposition die entsprechende Position passiert hat.

Dieser Bewegungsablauf der Tragelemente beim Zurückbewegen in die Fahrspur entspricht - wiederum im umgekehrten Sinne - dem Bewegungsablauf bei der Ausgestaltung nach Anspruch 3 für das Herausbewegen der Tragelemente aus der Fahrspur. Die erforderlichen Stellkräfte zur Bewegung der Tragelemente können hierbei wieder begrenzt werden.

Die Rückförderung kann dabei sowohl bei dem Verfahren nach Anspruch 4 sowie auch bei dem Verfahren nach Anspruch 5 so erfolgen, dass die Tragelemente wieder an dieselbe Position zurückbewegt werden, aus der sie herausbewegt wurden. Dabei werden die Tragelemente nicht zurückbewegt, die an der Position sind, die der neuen anzusteuernden Sollposition der Messeinrichtung entspricht. Hier sind für die Durchführung des Messvorganges die Tragelemente durch die Lagerelemente der Messeinrichtung ersetzt.

Alternativ dazu kann die Rückförderung auch so erfolgen, dass die Tragelemente, die aus der Fahrspur herausbewegt werden, an einer anderen Stelle wieder hereinbewegt werden. Diese andere Stelle ist dann dort, wo ebenfalls ein Tragelement herausbewegt wurde, das auch an einer anderen Stelle wieder in die Fahrspur hineinbewegt wurde. Dabei werden die Tragelemente umlaufend bewegt, indem diese vor der Messeinrichtung (bezogen auf die Bewegungsrichtung der Messeinrichtung bei der Bewegung zur neuen anzusteuernden Sollposition) aus der Fahrspur herausbewegt werden und wieder hinter der Messeinrichtung in die Fahrspur hineinbewegt werden. Dabei müssen für dieses Ausführungsbeispiel der Tragelemente an der Messeinrichtung vorbeibewegt werden.
Anspruch 6 betrifft einen Fahrzeugprüfstand mit wenigstens einer in Fahrzeuglängsrichtung gebildeten Fahrspur, wobei die Fahrspur wengistens eine verschiebbare Radaufnahme (101; 201) umfasst, die jeweils einem Fahrzeugrad eines in dem Fahrzeugprüfstand zu prüfenden Fahrzeugs zugeordnet ist, wobei die Zuordnung derart erfolgt, dass das jeweilige Fahrzeugrad während des Prüfvorgangs auf der Radaufnahme aufsteht bzw. abrollt. Der Fahrzeugprüfstand weist Tragelemente auf, die sich in der Fahrspur des Fahrzeugs befinden und die das Fahrzeug beim Überfahren bzw. beim Anhalten stützend tragen. Die Tragelemente und die wenigstens eine Radaufnahme schließen derart aneinander an, dass diese eine Fahrspur bilden zum Einfahren und auch zum Ausfahren eines zu prüfenden Fahrzeugs in den Fahrzeugprüfstand hinein bzw. aus dem Fahrzeugprüfstand hinaus. Nach der vorliegenden Erfindung ist dem Fahrzeugprüfstand wenigstens eine Fördereinrichtung zugeordnet. Außerdem sind die Tragelemente in Längsrichtung der Fahrspur in dem Fahrzeugprüfstand derart segmentiert, dass durch den Betrieb der wenigstens einen Fördereinrichtung die Tragelemente in einer Richtung quer zur Längsrichtung der Fahrspur aus der Fahrspur herausbewegbar sind.
Hierbei erweist es sich als vorteilhaft, dass die Radaufnahme in Längsrichtung des Fahrzeugprüfstandes verstellt werden kann abhängig von den Anforderungen, die durch das Fahrzeug gegeben sind (insbesondere hinsichtlich des Radstandes des Fahrzeugs).
Da die Tragelemente quer zur Fahrzeuglängsrichtung aus der Fahrspur hinausbewegt werden, wird es möglich, die Radaufnahme beliebig zu positionieren. Bei einer der bekannten Lösungen nach dem Stand der Technik ist die Bewegungsmöglichkeit der Radaufnahme eingeschränkt. Da bei dieser Lösung die Tragelemente in Längsrichtung der Fahrspur übereinander geschoben werden, ergibt sich - bei mehreren Radaufnahmen in einer Fahrspur - ein Mindestabstand zwischen den Radaufnahmen, der der Größe eines Tragelementes entspricht.
Durch die Bewegung der Tragelemente quer zur Längsrichtung der Fahrspur können diese Probleme vorteilhaft vermieden werden.

Bei der Ausgestaltung nach Anspruch 7 ist der wenigstens einen Radaufnahme wenigstens eine Fördereinheit zugeordnet derart, dass durch den Betrieb der wenigstens einen Fördereinheit diejenigen Tragelemente aus der Fahrspur heraus in einen Aufnahmeraum bewegbar sind, die der Fortbewegung der Radaufnahme bei einer Änderung von deren Position in Fahrzeuglängsrichtung im Fahrzeugprüfstand im Weg sind.

Diese Ausgestaltung des Fahrzeugprüfstandes entspricht der Ausgestaltung des Verfahrens nach Anspruch 3. Es werden die Tragelemente synchronisiert zur Bewegung der Radaufnahme aus der Fahrspur herausbewegt, die sich in Bewegungsrichtung der Radaufnahme vor der Radaufnahme befinden.

Bei der Ausgestaltung nach Anspruch 8 ist der wenigstens einen Radaufnahme wenigstens ein Fördermittel zugeordnet derart, dass durch den Betrieb des wenigstens einen Fördermittels die Tragelemente aus dem Aufnahmeraum heraus wieder in die Fahrspur hinein bewegt werden, wenn die wenigstens eine Radaufnahme bei deren Positionsänderung die Position des jeweiligen Tragelementes in der Fahrspur passiert hat.

Diese Ausgestaltung des Fahrzeugprüfstandes entspricht der Ausgestaltung des Verfahrens nach Anspruch 5.

Bei der Ausgestaltung des Fahrzeugprüfstands nach Anspruch 9 sind an den Tragelementen Angreifelemente angebracht, an denen die wenigstens eine Fördereinheit angreift.

Dadurch können die Tragelemente in einfacher Weise sicher und definiert gegriffen werden.

Bei der Ausgestaltung des Fahrzeugprüfstands nach Anspruch 10 sind der wenigstens einen Radaufnahme flächige Abdeckelemente zugeordnet, die die Fahrspur sowie den Aufnahmeraum zumindest in dem Bereich überdecken, in dem Tragelemente in Bewegung sind.

Dadurch wird vorteilhaft die Arbeitssicherheit verbessert, weil sich dann keine Personen in den Bereichen befinden können, in die Tragelemente eingeschoben bzw. eingeklappt werden.

Vorteilhaft sind die Abdeckelemente so stabil ausgestaltet, dass diese für die Fahrzeuge überfahrbar sind. Dies erweist sich insofern als vorteilhaft, als die Tragelemente in einer bestimmten Größe segmentiert sind. Die Sollposition der Radaufnahme ist durch den Radstand des Fahrzeugs vorgegeben. Es kann daher vorkommen, dass der Zwischenraum zwischen zwei Radaufnahmen im Fahrzeugprüfstand nicht vollständig durch Tragelemente ausgefüllt werden kann. Dies ist dann der Fall, wenn der Abstand zwischen den Radaufnahmen nicht ganzzahlig durch die segmentierte Größe der Tragelemente in Längsrichtung des Prüfstands teilbar ist. Da die Tragelemente aber nur "ganz oder gar nicht" in die Fahrspur eingeschoben werden können, bleibt dann eine Lücke. Vorteilhaft kann daher diese Lücke durch ein Abdeckelement überbrückt werden.

Die Ausgestaltung nach Anspruch 10 eignet sich insbesondere für eine Ausgestaltung, bei der nicht alle Tragelemente gleichzeitig aus der Fahrspur herausbewegt bzw. in die Fahrspur hineinbewegt werden. Werden nur einige Tragelemente in Bewegungsrichtung vor sowie hinter der Radaufnahme bewegt, sind die Abdeckelemente in ihrer Größe entsprechend beschränkt.

Ein Ausführungsbeispiel der Erfindung ist in der Zeichnung dargestellt. Es zeigt dabei:
- Fig. 1:: ein erstes Ausführungsbeispiel für die Bewegung der Tragelemente und
- Fig. 2:: ein weiteres Ausführungsbeispiel für die Bewegung der Tragelemente.

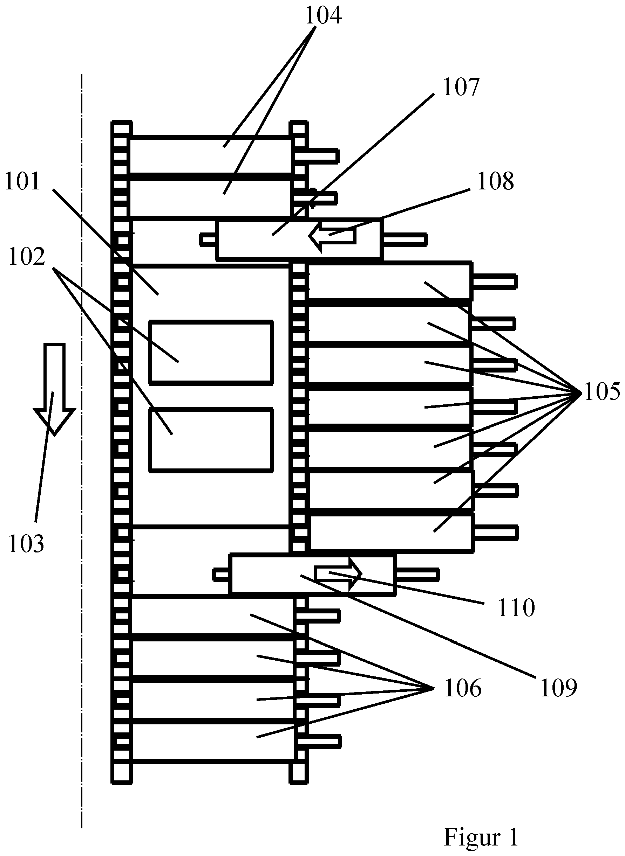

Figur 1 zeigt ein erstes Ausführungsbeispiel für die Bewegung der Tragelemente 104, 105, 106, 108 und 109.

Es ist zu sehen, dass eine Radaufnahme 101 mit einer Doppelrolle 102 in Richtung des Pfeils 103 in der Fahrspur eines Fahrzeugprüfstandes bewegt wird. In Bewegungsrichtung (103) der Radaufnahme 101 schließen sich vor und hinter der Radaufnahme 101 Tragelemente 104, 108 sowie 110 und 106 an.

Die Tragelemente 104 und 106 liegen in der Fahrspur.

Die Tragelemente 105 sind seitlich aus der Fahrspur herausbewegt worden und befinden sich in einem Aufnahmeraum für diese Tragelemente 105.

Es ist weiterhin zu sehen, dass das Tragelement 110, das sich in Bewegungsrichtung (103) der Radaufnahme 101 unmittelbar vor der Radaufnahme 101 befindet, gerade in Richtung des Pfeils 109 aus der Fahrspur herausbewegt wird. Dieses Tragelement 110 wird so weit aus der Fahrspur herausbewegt wie die Tragelemente 105. Dadurch wird der Raum in der Fahrspur in Bewegungsrichtung (103) vor der Radaufnahme 101 frei gemacht, so dass die Radaufnahme ungehindert in der Bewegungsrichtung (103) bewegt werden kann.

Es ist weiterhin zu sehen, dass in den Freiraum in Bewegungsrichtung (103) hinter der Radaufnahme 101 wieder ein Tragelement 107 hineinbewegt wird. Diese Bewegung entspricht einer Bewegung in Richtung des Pfeils 108. Die Radaufnahme 101 hat diesen Freiraum gerade passiert. Durch das Hineinbewegen des Tragelementes 107 in diesen Freiraum wird vermieden, dass in der Fahrspur des Fahrzeugprüfstandes eine Lücke entsteht, in die ein Rad des Fahrzeugs absinken bzw. hineinfallen könnte, wenn das Fahrzeug in dem Fahrzeugprüfstand steht bzw. in den Fahrzeugprüfstand hinein- oder hinausfährt.

Indem sich also die Tragelemente 104, 107, 110, 106 (insbesondere die vollständig in der Fahrspur befindlichen Tragelemente 104 und 106) an die Radaufnahme 101 anschließen, entstehen keine Löcher in der Fahrspur.

Gegebenenfalls kann die Radaufnahme noch mit einer Abdeckung versehen sein, die sich in Bewegungsrichtung (103) vor und hinter der Radaufnahme befindet, so dass die Bereiche vor und hinter der Radaufnahme 101, in denen Tragelemente 107 und 110 nur teilweise in der Fahrspur sind, von dieser Abdeckung überdeckt werden. Dadurch werden sowohl Lücken in der Fahrspur vermieden sowie auch die Arbeitssicherheit erhöht, weil die Bereiche überdeckt werden, in denen Tragelemente bewegt werden. Die Verletzungsgefahr für Werker in der Nähe der Fahrspur des Fahrzeugprüfstandes wird dadurch verringert.

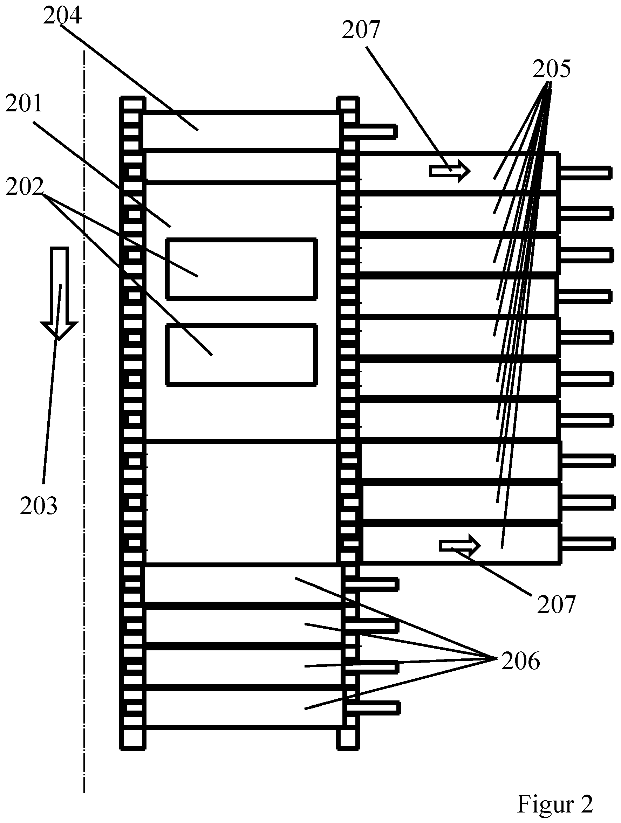

Durch die strichpunktierte Linie wird sowohl in der Figur sowie auch in der Figur 2 gezeigt, dass lediglich eine Fahrspur des Fahrzeugprüfstandes dargestellt ist. Bei mehrspurigen Fahrzeugen ist selbstverständlich eine weitere Fahrspur vorhanden. Die Fahrspuren sind auch lediglich in einem Teilausschnitt in Längsrichtung der Fahrspur dargestellt. Die Fahrspuren können mehrere Radaufnahmen enthalten, die dann entsprechend ihrer Abstände zueinander auf die entsprechenden Sollpositionen bewegt werden können. Dadurch lassen sich die Fahrzeugprüfstände in einfacher Weise an verschiedene Fahrzeugtypen anpassen hinsichtlich der Zahl der Achsen sowie der Radstände. Durch die Tragelemente und deren Bewegbarkeit aus der Fahrspur heraus und in die Fahrspur hinein wird dabei sichergestellt, dass in der Fahrspur keine Lücken entstehen, in die ein Fahrzeugrad einsinken kann.

Figur 2 zeigt ein anderes Ausführungsbeispiel zur Bewegung der Tragelemente 204, 205 und 206.

Es ist zu sehen, dass die Fahrspur auf einer größeren Länge (insbesondere im Vergleich zur Darstellung der Figur 1) frei ist. Die Tragelemente 205 wurden vor Beginn der Bewegung der Radaufnahme 201 mit den Doppelrollen 202 (in Richtung des Pfeils 203) aus der Fahrspur herausbewegt. Dies ist symbolisch durch die Pfeile 207 dargestellt, die bei der Gruppe der Tragelemente 205 an dem ersten und dem letzten Tragelement markiert sind. Wenn die Tragelemente 205 aus der Fahrspur herausbewegt worden sind, wird bei dem Ausführungsbeispiel der Figur 2 die Radaufnahme 201 in Richtung des Pfeils 203 auf die neue Sollposition bewegt.

Wenn diese Sollposition erreicht ist, werden diejenigen Tragelemente 205 wieder in die Fahrspur zurückbewegt, die in eine Position bewegt werden können, an der sich die Radaufnahme 201 in der neuen Sollposition nicht befindet. Dadurch wird wiederum erreicht, dass sich eine Fahrspur in dem Fahrzeugprüfstand ergibt, die keine "Löcher" aufweist.

Ein Fahrzeug kann dann in den Fahrzeugprüfstand einfahren.

## Patentansprüche

1. Verfahren zur Bildung einer Fahrspur in Fahrzeuglängsrichtung in einem Fahrzeugprüfstand, wobei die Fahrspur wenigstens eine verschiebbare Radaufnahme (101; 201) umfasst, wobei die Radaufnahme (101; 201) an die Position eines der wenigstens einen Radaufnahme (101; 201) zugeordneten Rades eines in dem Fahrzeugprüfstand zu prüfenden Fahrzeugs verschiebbar ist, wobei die Zuordnung derart erfolgt, dass das jeweilige Fahrzeugrad während des Prüfvorgangs im Fahrzeugprüfstand auf der Radaufnahme (101; 201) aufsteht bzw. abrollt, wobei der Fahrzeugprüfstand Tragelemente (104, 106; 204, 206) aufweist, die sich in der Fahrspur des Fahrzeugs befinden und die das Fahrzeug beim Überfahren bzw. beim Anhalten stützend tragen, wobei sich die Tragelemente (104, 106; 204, 206) und die wenigstens eine Radaufnahme (101; 201) derart aneinander anschließen, dass diese eine Fahrspur bilden zum Einfahren und auch zum Ausfahren eines zu prüfenden Fahrzeugs in den Fahrzeugprüfstand hinein bzw. aus dem Fahrzeugprüfstand hinaus,
**dadurch gekennzeichnet, dass** die Tragelemente (104, 105, 106, 107, 109; 204, 205, 206) in Fahrzeuglängsrichtung derart segmentiert sind, dass diese Tragelemente (104, 105, 106, 107, 109; 204, 205, 206) jeweils separat bewegbar sind in einer Richtung (108, 110; 207) quer zur Fahrzeuglängsrichtung, wobei für eine Änderung der Position der wenigstens einen Radaufnahme (101; 201) im Fahrzeugprüfstand in Fahrzeuglängsrichtung diejenigen Tragelemente (105, 109; 205) aus der Fahrspur herausbewegt werden, die sich zwischen der aktuellen Istposition der Radaufnahme (101; 201) und der nächsten anzusteuernden Sollposition der Radaufnahme (101; 201) in der Fahrspur befinden.

2. Verfahren nach Anspruch 1,
**dadurch gekennzeichnet, dass** in einem ersten Schritt alle aus der Fahrspur herauszubewegenden Tragelemente (205) bestimmt werden, die sich zwischen der aktuellen Istposition der Radaufnahme (201) und der nächsten anzusteuernden Sollposition der Radaufnahme (201) in der Fahrspur befinden, wobei in einem zweiten Schritt die im Schritt 1 bestimmten Tragelemente (205) aus der Fahrspur entfernt werden, wobei in einem dritten Schritt die Radaufnahme (201) auf die nächste anzusteuernde Sollposition bewegt wird.

3. Verfahren nach Anspruch 1,
**dadurch gekennzeichnet, dass** eine definierte Menge von Tragelementen (110) aus der Fahrspur herausbewegt werden, die sich jeweils in Bewegungsrichtung (103) vor der Radaufnahme (101) befinden bei der Bewegung der Radaufnahme (101) von der Istposition zur nächsten anzusteuernden Sollposition.

4. Verfahren nach einem der Ansprüche 1 bis 3,
**dadurch gekennzeichnet, dass** die Rückförderung der Tragelemente (205) in die Fahrspur des Fahrzeugs im Fahrzeugprüfstand derart erfolgt, dass aus der Fahrspur herausbewegte Tragelemente (205) zunächst in dieser Position verbleiben bis die Radaufnahme (201) die anzusteuernde Sollposition erreicht hat und dass nach dem Erreichen der anzusteuernden Sollposition durch die Radaufnahme (201) die Tragelemente (205) wieder in die Fahrspur des Fahrzeugs bewegt werden.

5. Verfahren nach einem der Ansprüche 1 bis 3,
**dadurch gekennzeichnet, dass** aus der Fahrspur herausbewegte Tragelemente (107) unmittelbar dann wieder in eine Position in Bewegungsrichtung (103) der Radaufnahme (101) hinter der Radaufnahme (101) in die Fahrspur hineinbewegt werden, wenn die Radaufnahme (101) bei der Bewegung (103) von deren Istposition zur anzusteuernden Sollposition die entsprechende Position passiert hat.

6. Fahrzeugprüfstand mit wenigstens einer in Fahrzeuglängsrichtung gebildeten Fahrspur, wobei die Fahrspur wengistens eine verschiebbare Radaufnahme (101; 201) umfasst, die jeweils einem Fahrzeugrad eines in dem Fahrzeugprüfstand zu prüfenden Fahrzeugs zugeordnet sind, wobei die Zuordnung derart erfolgt, dass das jeweilige Fahrzeugrad während des Prüfvorgangs auf der Radaufnahme (101; 201) aufsteht bzw. abrollt, wobei der Fahrzeugprüfstand Tragelemente (104, 106; 204, 206) aufweist, die sich in der Fahrspur des Fahrzeugs befinden und die das Fahrzeug beim Überfahren bzw. beim Anhalten stützend tragen, wobei sich die Tragelemente (104, 106; 204, 206) und die wenigstens eine Radaufnahme (101; 201) derart aneinander anschließen, dass diese eine Fahrspur bilden zum Einfahren und auch zum Ausfahren eines zu prüfenden Fahrzeugs in den Fahrzeugprüfstand hinein bzw. aus dem Fahrzeugprüfstand hinaus,
**dadurch gekennzeichnet, dass** dem Fahrzeugprüfstand wenigstens eine Fördereinrichtung zugeordnet ist, dass die Tragelemente (104, 105, 106, 107, 109; 204, 205, 206) in Längsrichtung der Fahrspur in dem Fahrzeugprüfstand segmentiert sind derart, dass durch den Betrieb der wenigstens einen Fördereinrichtung die Tragelemente (105, 109; 205) in einer Richtung quer zur Längsrichtung der Fahrspur aus der Fahrspur herausbewegbar sind.

7. Fahrzeugprüfstand nach Anspruch 6,
**dadurch gekennzeichnet, dass** der wenigstens einen Radaufnahme (101; 201) wenigstens eine Fördereinheit zugeordnet ist derart, dass durch den Betrieb der wenigstens einen Fördereinheit diejenigen Tragelemente (109) aus der Fahrspur heraus in einen Aufnahmeraum bewegbar sind (110), die der Fortbewegung der Radaufnahme (101) bei einer Änderung von deren Position in Fahrzeuglängsrichtung im Fahrzeugprüfstand im Weg sind

8. Fahrzeugprüfstand nach Anspruch 6 oder 7,
**dadurch gekennzeichnet, dass** der wenigstens einen Radaufnahme (101) wenigstens ein Fördermittel zugeordnet ist derart, dass durch den Betrieb des wenigstens einen Fördermittels die Tragelemente (107) aus dem Aufnahmeraum heraus wieder in die Fahrspur hinein bewegt werden, wenn die wenigstens eine Radaufnahme (101) bei deren Positionsänderung die Position des jeweiligen Tragelementes (107) in der Fahrspur passiert hat.

9. Fahrzeugprüfstand nach einem der Anspruche 6 bis 8,
**dadurch gekennzeichnet, dass** an den Tragelementen (104, 105, 106, 107, 109; 204, 205, 206) Angreifelemente angebracht sind, an denen die wenigstens eine Fördereinheit angreift.

10. Fahrzeugprüfstand nach einem der Ansprüche 6 bis 9,
**dadurch gekennzeichnet, dass** der wenigstens einen Radaufnahme (101) flächige Abdeckelemente zugeordnet sind, die die Fahrspur sowie den Aufnahmeraum zumindest in dem Bereich überdecken, in dem Tragelemente (107, 109) in Bewegung sind.

## Claims

1. Method for forming a driving lane in the longitudinal direction of a vehicle in a vehicle test stand, wherein the driving lane includes at least one displaceable wheel receiving area (101; 201), wherein the wheel receiving area (101; 201) is displaceable to the position of one of the wheels assigned to the at least one wheel receiving area (101: 201) of a vehicle to be tested in the vehicle test stand, wherein the assignment occurs in such a manner that the respective vehicle wheel stands or rolls on the wheel receiving area (101; 201) during the test procedure in the vehicle test stand, wherein the vehicle test stand comprises support elements (104, 106; 204, 206), which are located in the driving lane of the vehicle, and supportingly bear the vehicle while driving over or while stopping, wherein the support elements (104, 106; 204, 206) and the at least one wheel receiving area (101; 201) adjoin to one another in such a manner that they form a driving lane for driving in, and also for driving out a vehicle to be tested into the vehicle test stand, or out of the vehicle test stand,
**characterized in that** the support elements (104, 105, 106, 107, 109; 204, 205, 206) are segmented in the longitudinal direction of the vehicle in such a manner that these support elements (104, 105, 106, 107, 109; 204, 205, 206) are each separately moveable in a direction (108, 110; 207) transverse to the longitudinal direction of the vehicle, wherein, for the altering of the position of the at least one wheel receiving area (101; 201) in the vehicle test stand in the longitudinal direction of the vehicle, those support elements (105, 109; 205), which are located between the current actual position of the wheel receiving area (101; 201) and the next target position of the wheel receiving area (101; 201) to be steered to in the driving lane, are moved out of the driving lane.

2. Method according to claim 1,
**characterized in that**, in a first step, all support elements (205) to be moved out of the driving lane are determined, which are located between the current actual position of the wheel receiving area (201) and the next target position of the wheel receiving area (201) to be steered to in the driving lane, wherein, in a second step, the support elements (205) determined in step 1 are removed from the driving lane, wherein, in a third step, the wheel receiving area (201) is moved to the next target position to be steered to.

3. Method according to claim 1,
**characterized in that** a defined quantity of support elements (110) are moved out of the driving lane, which are located respectively in the direction of movement (103) in front of the wheel receiving area (101) in the movement of the wheel receiving area (101) from the actual position to the next target position to be steered to.

4. Method according to one of the claims 1 to 3,
**characterized in that** returning the support elements (205) into the driving lane of the vehicle in the vehicle test stand occurs in such a manner that support elements (205) moved out of the driving lane initially remain in this position, until the wheel receiving area (201) has reached the target position to be steered to, and **in that** after reaching the target position to be steered to, the support elements (205) are again moved into the driving lane of the vehicle via the wheel receiving area (201).

5. Method according to one of the claims 1 to 3,
**characterized in that**, support elements (107) moved out of the driving lane, are then directly moved into the driving lane behind the wheel receiving area (101) again into a position in the direction of movement (103) of the wheel receiving area (101), when the wheel receiving area (101) moved past the corresponding position in the movement (103) from the actual position to the target position to be steered to.

6. Vehicle test stand with at least one driving lane formed in the longitudinal direction of the vehicle, wherein the driving lane includes at least one displaceable wheel receiving area (101; 201), which are respectively assigned to a vehicle wheel of a vehicle to be tested in the vehicle test stand, and wherein the assignment occurs in such a manner that the respective vehicle wheel stands or rolls on the wheel receiving area (101; 201) during the test procedure, wherein the vehicle test stand comprises support elements (104, 106; 204, 206), which are located in the driving lane of the vehicle, and which supportingly bear the vehicle while driving over or while stopping, wherein the support elements (104, 106; 204, 206) and the at least one wheel receiving area (101; 201) adjoin to one another in such a manner that they form a driving lane for driving in, and also for driving out a vehicle to be tested into the vehicle test stand, or out of the vehicle test stand,
**characterized in that** the vehicle test stand is assigned at least one conveying device, that the support elements (104, 105, 106, 107, 109; 204, 205, 206) are segmented in the longitudinal direction of the driving lane in the vehicle test stand in such a manner that, via the operation of the least one conveying device, the support elements (105, 109; 205) are moveable out of the driving lane in a direction transverse to the longitudinal direction of the driving lane.

7. Vehicle test stand according to claim 6,
**characterized in that** the at least one wheel receiving area (101; 201) is assigned at least one conveying unit in such a manner that, via the operation of the at least one conveying unit, those support elements (109) are moveable out of the driving lane into a receiving space (110), which are in the way of the locomotion of the wheel receiving area (101) in an altering of the position thereof in the longitudinal direction of the vehicle in the vehicle test stand.

8. Vehicle test stand according to claim 6 or 7,
**characterized in that** the at least one wheel receiving area (101) is assigned at least one conveying means in such a manner that, via the operation of the at least one conveying means, the support elements (107) are moved out of the receiving space into the driving lane again when the at least one wheel receiving area (101), in the altering of the position thereof, has moved past the position of the respective support element (107) in the driving lane.

9. Vehicle test stand according to one of the claims 6 to 8,
**characterized in that** engaging elements are attached to the support elements (104, 105, 106, 107, 109; 204, 205, 206), on which the at least one conveying unit engages.

10. Vehicle test stand according to one of the claims 6 to 9,
**characterized in that** flat covering elements are assigned to the at least one wheel receiving area (101), which covering elements cover the driving lane, as well as the receiving space at least in the region in which support elements (107, 109) are in movement.

## Revendications

1. Procédé pour former une voie de roulement dans la direction longitudinale du véhicule dans un banc d'essai de véhicule, la voie de roulement comprenant au moins un siège de roue (101 ; 201) déplaçable, le siège de roue (101 ; 201) pouvant être déplacé jusqu'à la position d'une roue d'un véhicule à tester dans le banc d'essai de véhicule, laquelle roue est affectée à l'au moins un siège de roue (101 ; 201), l'affectation étant réalisée de telle sorte que la roue du véhicule considérée se tient ou roule sur le siège de roue (101 ; 201) pendant la procédure de contrôle dans le banc d'essai de véhicule, le banc d'essai de véhicule étant muni d'éléments de support (104, 106 ; 204, 206) qui se trouvent dans la voie de roulement du véhicule et qui supportent le véhicule lorsque celui-ci roule dessus ou est arrêté, les éléments de support (104, 106 ; 204, 206) et l'au moins un siège de roue (101 ; 201) se raccordant l'un à l'autre de telle sorte que ceux-ci forment une voie de roulement pour l'entrée d'un véhicule à contrôler dans le banc d'essai de véhicule, mais aussi pour sa sortie hors du banc d'essai de véhicule,
**caractérisé en ce que** les éléments de support (104, 105, 106, 107, 109 ; 204, 205, 206) sont segmentés dans la direction longitudinale du véhicule de telle sorte que ces éléments de support (104, 105, 106, 107, 109 ; 204, 205, 206) sont chacun séparément mobiles dans une direction (108, 110 ; 207) transversale à la direction longitudinale du véhicule, les éléments de support (105, 109 ; 205) qui sont situés dans la voie de roulement entre la position réelle actuelle du siège de roue (101 ; 201) et la prochaine position prescrite à atteindre du siège de roue (101 ; 201) étant déplacés hors de la voie de roulement pour un changement de la position de l'au moins un siège de roue (101 ; 201) dans le banc d'essai du véhicule dans la direction longitudinale du véhicule.

2. Procédé selon la revendication 1,
**caractérisé en ce que** dans une première étape, on détermine tous les éléments de support (205) qui se trouvent dans la voie de roulement entre la position réelle actuelle du siège de roue (201) et la prochaine position prescrite à atteindre du siège de roue (201) et qui sont à déplacer hors de la voie de roulement, dans une deuxième étape, les éléments de support (205) déterminés dans l'étape 1 sont écartés de la voie de roulement, dans une troisième étape le siège de roue (201) est déplacé dans la prochaine position prescrite à atteindre.

3. Procédé selon la revendication 1, **caractérisé en ce qu'**on délace hors de la voie de roulement une quantité définie d'éléments de support (110) qui se trouvent chacun devant le siège de roue (101) considéré dans la direction de mouvement (103) lors du déplacement du siège de roue (101) de la position réelle à la prochaine position prescrite à atteindre.

4. Procédé selon l'une des revendications 1 à 3, **caractérisé en ce que** le retour des éléments de support (205) dans la voie de roulement du véhicule dans le banc d'essai de véhicule est réalisé de telle sorte que des éléments de support (205) déplacés hors de la voie de roulement restent initialement dans cette position jusqu'à ce que le support de roue (201) ait atteint la position prescrite à atteindre et qu'après que le siège de roue (201) a atteint la position prescrite à atteindre, les éléments de support (205) sont ramenés dans la voie de roulement du véhicule.

5. Procédé selon l'une des revendications 1 à 3, **caractérisé en ce que** des éléments de support (107) déplacés hors de la voie de roulement sont ramenés dans la voie de roulement dans une position située derrière le siège de roue (101), considéré dans la direction de déplacement (103) du siège de roue (101), immédiatement lorsque le siège de roue (101) lors du mouvement (103) de sa position réelle à la position prescrite à atteindre a dépassé la position correspondante.

6. Banc d'essai de véhicule avec au moins une voie de roulement formée dans la direction longitudinale du véhicule, la voie de roulement comprenant au moins un siège de roue (101 ; 201) déplaçable qui est/sont chacun affecté(s) à une roue de véhicule d'un véhicule à contrôler dans le banc d'essai de véhicule, l'affectation étant réalisée de telle sorte que la roue du véhicule considérée se tient ou roule sur le siège de roue (101 ; 201) pendant la procédure de contrôle, le banc d'essai de véhicule étant muni d'éléments de support (104, 106 ; 204, 206) qui se trouvent dans la voie de roulement du véhicule et qui supportent le véhicule lorsque celui-ci roule dessus ou est arrêté, les éléments de support (104, 106 ; 204, 206) et l'au moins un siège de roue (101 ; 201) se raccordant l'un à l'autre de telle sorte que ceux-ci forment une voie de roulement pour l'entrée d'un véhicule à contrôler dans le banc d'essai de véhicule, mais aussi pour sa sortie hors du banc d'essai de véhicule,
**caractérisé en ce qu'**au moins un dispositif de transport est associé au banc d'essai de véhicule, **en ce que** les éléments de support (104, 105, 106, 107, 109 ; 204, 205, 206) sont segmentés de telle sorte dans la direction longitudinale de la voie de roulement dans le banc d'essai de véhicule, que les éléments de support (105, 109 ; 205) peuvent être déplacés hors de la voie de roulement dans une direction transversale à la direction longitudinale de la voie de roulement en actionnant le au moins un dispositif de transport.

7. Banc d'essai du véhicule selon la revendication 6, **caractérisé en ce qu'**au moins une unité de transport est associée à l'au moins un siège de roue (101 ; 201) de telle sorte que, en faisant fonctionner l'au moins une unité de transport, les éléments de support (109) qui se trouvent dans le chemin de déplacement du siège de roue (101) lors d'une modification de sa position en direction longitudinale du véhicule dans le banc d'essai du véhicule, peuvent être déplacés (110) hors de la voie de roulement dans un espace de logement.

8. Banc d'essai du véhicule selon la revendication 6 ou 7, **caractérisé en ce qu'**au moins un moyen de transport est associé à l'au moins un siège de roue (101) de telle sorte que par actionnement de l'au moins un moyen de transport, les éléments de support (107) sont sortis hors de l'espace de logement et ramenés dans la voie de roulement lorsque l'au moins un siège de roue (101), lors de son changement de position, a dépassé la position de l'élément de support (107) considéré dans la voie de roulement.

9. Banc d'essai du véhicule conformément à l'une des revendications 6 à 8,
**caractérisé en ce que** des éléments d'attaque sont placés sur les éléments de support (104, 105, 106, 107, 109 ; 204, 205, 206) sur lesquels agit l'au moins une unité de transport.

10. Banc d'essai de véhicule selon l'une des revendications 6 à 9, **caractérisé en ce que** des éléments de recouvrement plats sont associés à l'au moins un siège de roue (101), lesquels recouvrent la voie de roulement et l'espace de logement au moins dans la zone dans laquelle des éléments de support (107, 109) sont en mouvement.
